# EUROPÄISCHE PATENTSCHRIFT

(11) **EP 1 300 047 B1**
(45) Veröffentlichungstag und Bekanntmachung des Hinweises auf die Patenterteilung: **16.03.2005**
(21) Anmeldenummer: 01951634.3
(22) Anmeldetag: 25.06.2001
(51) Int. Cl.: H04R 3/00

(54) **FILTER**
FILTER
FILTRE

(30) Priorität: 13.07.2000 AT 12202000
(43) Veröffentlichungstag der Anmeldung: 09.04.2003
(73) Patentinhaber: Andritz AG, 8045 Graz (AT)
(72) Erfinder: ZEGG, Herbert, A-8112 Gratwein (AT); ERKINGER, Werner, A-8047 Graz (AT)
(74) Vertreter: Schweinzer, Friedrich
(86) Internationale Anmeldenummer: PCT/EP2001/007205
(87) Internationale Veröffentlichungsnummer: WO 2002/007478

(56) Entgegenhaltungen:
- WO-A-00/09239
- DE-A- 3 814 373
- DE-A- 19 502 848
- FR-A- 912 116
- FR-A- 1 211 614
- US-A- 3 251 469
- US-A- 4 925 557
- US-A- 5 601 711
- PATENT ABSTRACTS OF JAPAN vol. 1995, no. 06, 31. Juli 1995 (1995-07-31) -& JP 07 075722 A (AGENCY OF IND SCIENCE & TECHNOL;OTHERS: 01), 20. März 1995 (1995-03-20)
- PATENT ABSTRACTS OF JAPAN vol. 1998, no. 11, 30. September 1998 (1998-09-30) -& JP 10 146521 A (NITTO DENKO CORP), 2. Juni 1998 (1998-06-02)
- PATENT ABSTRACTS OF JAPAN vol. 018, no. 075 (C-1163), 8. Februar 1994 (1994-02-08) -& JP 05 285352 A (HITACHI PLANT ENG & CONSTR CO LTD), 2. November 1993 (1993-11-02) & DATABASE WPI , 2. November 1993 (1993-11-02) Derwent Publications Ltd., London, GB; AN 1993-382339
- PATENT ABSTRACTS OF JAPAN vol. 017, no. 221 (C-1054), 7. Mai 1993 (1993-05-07) & JP 04 358528 A (SHINKO PANTEC CO LTD), 11. Dezember 1992 (1992-12-11)

## Beschreibung

Die Erfindung betrifft ein Filter mit mehreren auf einer Welle angebrachten rotierenden Filterscheiben, die mit einem porösen Filtermedium versehen sind.

Derartige Filter sind bereits z.B. aus der AT 406 936 (AT- A 155/99) und der US-A-3 251 469 bekannt. Problematisch ist dabei die Verwendung von einer Vielzahl von Filterscheiben auf einer Welle, die mit den Filterscheiben einer weiteren Welle überlappen sollen. Um flexibel in der Wahl der Scheiben-Grundkörper zu sein und z.B. auch keramische verwenden zu können, empfiehlt sich eine kraftschlüssige Verbindung zwischen Welle und Scheibe. Die kraftschlüssige Verbindung muß dabei über ein Dichtelement erfolgen. Aus diesen Gegebenheiten ergeben sich folgende Risiken und Probleme:

Die Fertigungstoleranzen (Scheibe, Welle und die Distanzstücke) und der Einfluß der Kompressibilität der Dichtelemente können sich addieren, so daß nicht mehr der gewünschte Scheibenabstand erzielbar ist. Im Extremfall kann es zu Schäden durch direkten Kontakt der Scheiben kommen.

Vor allem bei Anfahrvorgängen kann es infolge der Massenträgheit der Filterscheiben bei zu geringem Kraftschluss zum Durchrutschen kommen. Dies führt zu einem starken Verschleiß der Dichtelemente.

Die Erfindung soll nunmehr einen sicheren Betrieb bei einfacher Fertigung eines Filters ermöglichen.

Sie ist daher dadurch gekennzeichnet, daß zwischen den einzelnen Filterscheiben auf der Welle Elastomerelemente als Abstandhalter angeordnet sind. Durch die Verwendung von Elastomerelementen als Dichtmaterial zwischen den einzelnen Filterscheiben und der Hohlwelle kann auf eine formschlüssige Drehmomentübertragung zwischen Scheiben und Hohlwellen verzichtet werden.

Eine vorteilhafte Weiterbildung der Erfindung ist dadurch gekennzeichnet, daß die Elastomerelemente aus einem Stück sind. Dies bedeutet speziell bei kleinen Abständen der Filterscheiben eine günstigere Fertigung.

Eine günstige alternative Weiterbildung der Erfindung ist dadurch gekennzeichnet, daß mehrere Abstandhalter aus Elastomer vorgesehen sind, wobei Abstandhalter aus Metall zwischengeschaltet sind. Speziell bei größeren Abständen der Filterscheiben kann durch zwischengeschaltete Metallhülsen (vor allem bei größerem Scheibenabstand) eine bessere Stabilität erreicht werden.

Eine günstige Ausgestaltung der Erfindung ist dadurch gekennzeichnet, daß mehrere Filterscheiben und Elastomerelemente gemeinsam axial vorgespannt sind, wobei 5 bis 20, vorzugsweise 10 bis 15 Filterscheiben zusammengespannt sein können. Durch diese Vorspannung kann in einfacher Weise eine Abdichtung der Filterscheibe zur Hohlwelle und eine gute Einstellung der Abstände zwischen den Filterscheiben bei gleichzeitigem Ausgleich der fertigungsbedingten Toleranzen in den Scheibenstärken, Kompressibilität der Dichtelemente usw. erfolgen. Durch das gemeinsame Vorspannen mehrere Filterscheiben können die Ungleichmäßigkeiten jeweils auf kurzem Wege ausgeglichen werden und das Problem der ungleichen Abstände beim Zusammenspannen aller Filterscheiben von einer Seite her entfällt.

Eine günstige Weiterbildung der Erfindung ist dadurch gekennzeichnet, daß mehrere Wellen mit Filterelementen in einer Ebene angeordnet und gemeinsam z.B. über einen Riemen angetrieben werden. Bei einer z.B. waagrechten Anordnung können alle nebeneinander angeordneten Wellen mit nur einem Antrieb gemeinsam angetrieben werden, wobei die Filterscheiben sich im Überlappungsbereich gegensinnig drehen und dadurch die Turbulenz an der Oberfläche und damit die Reinigung verbessern.

Eine vorteilhafte Ausgestaltung der Erfindung ist dadurch gekennzeichnet, daß mehrere Ebenen von Wellen mit Filterscheiben vorgesehen sind, die in einem gemeinsamen Gehäuse durch mit geeigneten Öffnungen versehene Trennwände voneinander getrennt sind. Auf diese Weise lassen sich zusätzlich mehrere Druckstufen in einem Gehäuse realisieren, wobei auch eine Stabilisierung des Gehäuses durch die Trennwände erfolgt.

Außerdem können durch eine geeignete Strömungsführung so Kurzschluss-Strömungen vermieden werden.

Eine vorteilhafte Weiterbildung der Erfindung ist dadurch gekennzeichnet, daß Einbauten vorgesehen sind, die den Umrissen der Filterscheiben angepaßt sind und den Hohlraum des Gehäuses verringern. Durch diese Einbauten, die in die Zwickel zwischen den Filterscheiben reichen, wird das freie Innenvolumen und der Totraum stark verringert, was speziell bei einer chargenweisen Aufkonzentration von Feststoffsuspensionen von großem Vorteil ist.

Eine günstige Ausgestaltung der Erfindung ist dadurch gekennzeichnet, daß an einem Ende der Wellen ein Filtratsammelkasten angeordnet ist, in den alle Hohlwellen münden und der vorzugsweise druckfest ausgebildet ist. Mit einem derartigen Sammelkasten kann auf die sonst notwendigen Drehdurchführungen zwischen Hohlwelle und Rohrleitung mit großem Platzbedarf verzichtet werden. Durch die druckfeste Ausgestaltung kann sowohl ein Überdruck zur Rückspülung als auch ein Unterdruck zur Erhöhung des Transmembrandruckes angelegt werden.

Eine weitere günstige Weiterbildung der Erfindung ist dadurch gekennzeichnet, daß der Zulauf des Rohmediums tangential zu den Filterscheiben erfolgt. Durch diese Strömungsführung kann eine gute Querstromfiltration erreicht werden, wobei auch die Filtration an den Scheiben nahe des Eintritts nicht gestört und eine Abrasion der Scheiben vermieden wird.

Eine vorteilhafte Ausgestaltung der Erfindung ist dadurch gekennzeichnet, daß die Drehzahl der mit Filterscheiben versehenen Wellen regelbar ist. Damit kann die Turbulenz zwischen den Filterscheiben ohne Änderung der Gesamtdurchströmung und/oder des Filtratdruckes an die Bedürfnisse speziell bei wechselnder Mediumzusammensetzung oder bei größeren Konzentrationsunterschieden entsprechend angepaßt werden.

Eine vorteilhafte Weiterbildung der Erfindung ist dadurch gekennzeichnet, daß eine Einrichtung zum langsamen Hochfahren beim Starten bzw. Abfahren beim Abschalten der Filtereinheit vorgesehen ist, wobei ein Motor mit Frequenzumformer oder eine Turbokupplung vorgesehen sein kann. Dadurch kann ein Durchrutschen der Filterscheiben beim Anfahren bzw. Abstellen vermieden werden. Dies ist besonders bei der kraftschlüssigen Verbindung durch die axiale Vorspannung mittels Elastomerringen vorteilhaft.

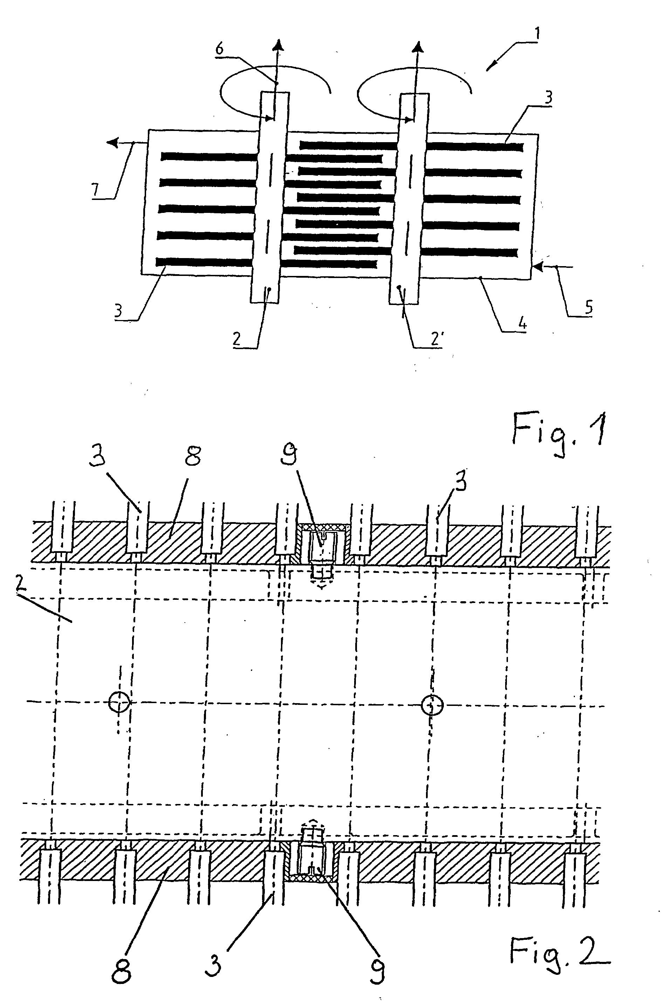

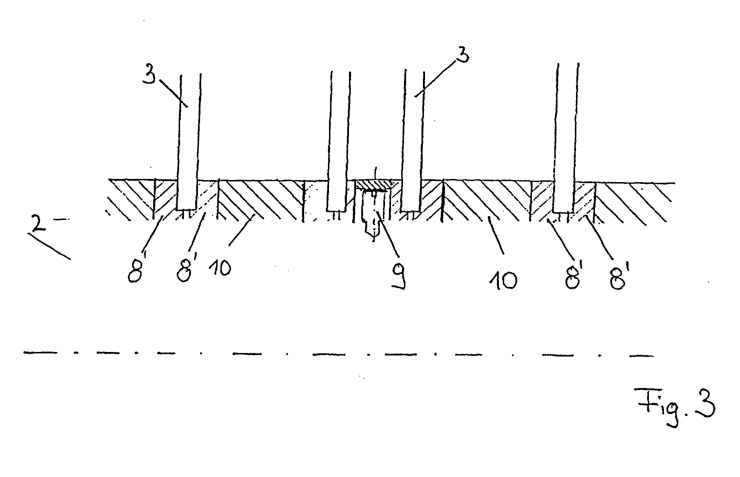

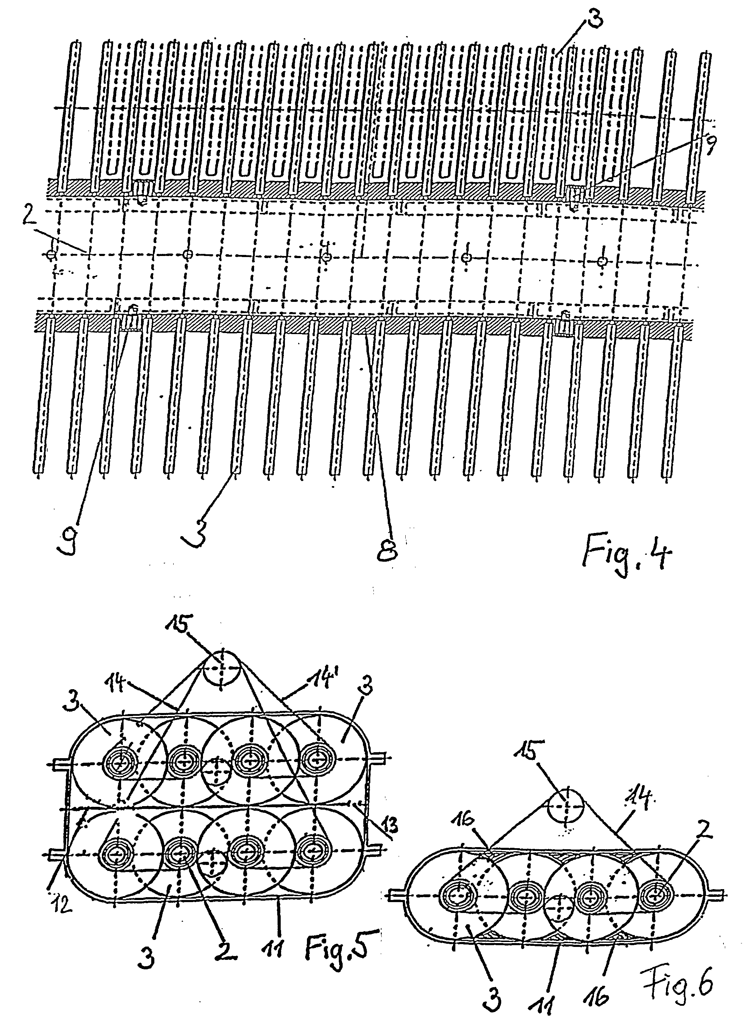

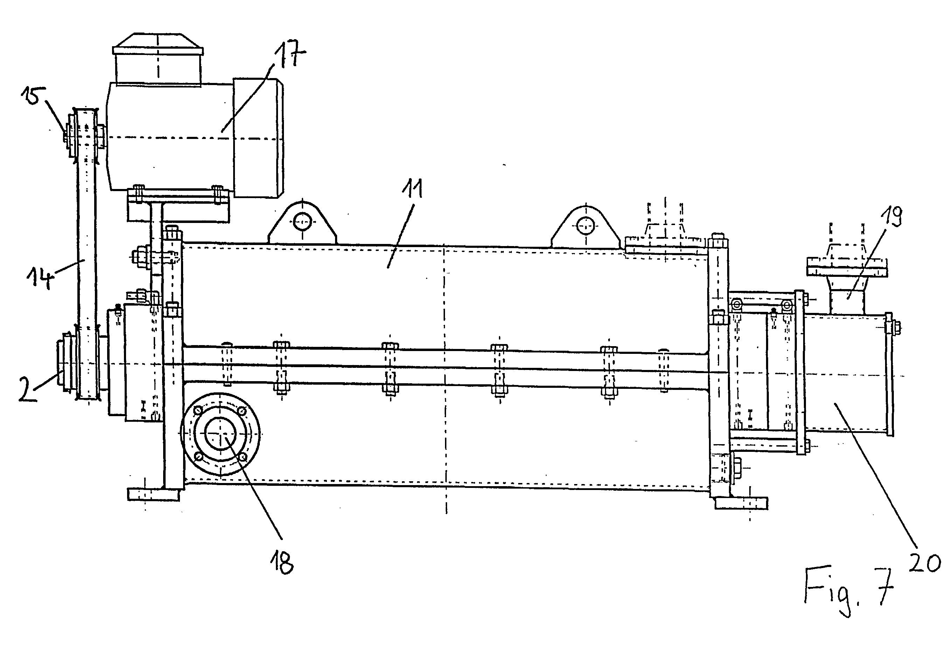

Die Erfindung wird nun anhand der Zeichnungen beispielhaft beschrieben, wobei
Fig. 1 ein Filter nach dem Stand der Technik, Fig. 2 eine Darstellung der Erfindung, Fig. 3 eine weitere Ausführung der Erfindung, Fig. 4 eine weitere Darstellung der Erfindung, Fig. 5 eine Anordnung der Wellen, Fig. 6 eine speziell Ausführung des Gehäuses, Fig. 7 eine Ansicht des Filters,
Fig. 1 zeigt ein Filtrationsmodul 1 gemäß dem Stand der Technik. Auf den Hohlwellen 2, 2' werden hier jeweils mehrere Membranscheiben 3 befestigt. Die zu filtrierende Flüssigkeit / Suspension wird über eine Leitung 5 einem Behälter 4 zugeführt. Hier ist ein geschlossener Behälter 4 dargestellt. Der Behälter kann auch offen sein, wobei die Membranen in die Flüssigkeit eingetaucht sind. Die Membranscheiben 3 weisen hier einen zylindrischen Querschnitt auf. Das Filtrat tritt durch die Membran in den hohlen Scheibenkörper 3 und wird als Permeat zur Mitte der Scheibe und durch die Hohlwelle 2, 2' über eine Leitung 6 nach außen geführt. Das gereinigte Konzentrat wird in weiterer Folge über Leitung 7 abgeführt. Das Membranmodul 1 kann sowohl mit konzentratseitigem Überdruck, als auch mit Unterdruck auf der Permeatseite betrieben werden. Dementsprechend kann das Modul 1 in geschlossenem Gehäuse 4 oder als getauchte Membranen eingesetzt werden. Der Überdruck kann dabei bis zu 10 - 14 bar betragen.
   Die Membranscheiben 3 können sowohl aus anorganischen Körpern, wie auch aus Stützkörpern mit einem Filtermedium (Sieb, Filz, Polymermembran) bestehen. Die Konstruktion eignet sich sowohl für eine chemische Reinigung des Filtermediums z.B. Membranen im Betrieb, als auch zur vollautomatischen Permeatrückspülung. Die Filtrationsmodule 1 können je nach Filtermedium für allgemeine Filtrationsvorgänge zur Feststoffabscheidung, für Mikrofiltration (ab ca. 0,3 µm), Ultrafiltration, Nanofiltration (bis ca. 4000 Dalton) bis zur Umkehrosmose in den Bereichen der Trinkwasseraufbereitung, Prozesswasseraufbereitung, kommunalen und industriellen Abwasseraufbereitung und auch in der Produktfiltration eingesetzt werden.
Fig. 2 zeigt einen Schnitt durch ein erfindungsgemäßes Filter, wobei nur eine Welle 2 mit den einzelnen Filterscheiben 3 dargestellt ist. Jeweils zwischen den einzelnen Filterscheiben 3 befinden sich auf der Hohlwelle 2 Elastomerelemente 8, die als Abstandhalter dienen. Hier sind einteilige Elastomerelemente 8 dargestellt, wie sie für kleine Abstände der Filterscheiben 3 zur Anwendung kommen. Weiters sind Stellringe mit Gewindestiften 9 dargestellt, mit denen die Filterscheiben 3 und Elastomerelemente 8 auf der Welle 2 fixiert werden.
Fig. 3 zeigt eine Variante der Abstandhalter, wobei jeweils an eine Filterscheibe 3 anschließend ein Elastomerelement 8' vorgesehen ist. Der größere Abstand zwischen den Filterscheiben 3 wird durch einen zwischen den zugeordneten Elastomerelementen 8' angeordneten Abstandhalter 10, der vorteilhafterweise aus Metall besteht, erreicht.
Fig. 4 stellt die Zusammenstellung mehrerer Filterscheiben 3 und Elastomerelemente 8 dar, wobei hier zu Beginn und am Ende eines derartigen Paketes jeweils Stellringe mit Gewindestiften 9 vorgesehen sind, die die Pakete aus Filterscheiben 3 und Elastomerelementen 8, bzw. auch Elastomerelementen 8' und zwischengeschalteten Abstandhaltern 10 aus Metall, unter Vorspannung zusammenhalten. Dadurch wird die Montage weiterer Pakete vereinfacht und auch eine entsprechende Genauigkeit der Lage der Filterscheiben 3 erreicht. Dies ist besonders wichtig, damit die Filterscheiben 3 einer weiteren Welle 2' einen annähernd konstanten Abstand haben und ohne Berührung in die Zwischenräume eingreifen können. Durch die dadurch erreichte Überlappung treten dann Turbulenzen auf, durch die eine effektive Reinigung der Oberflächen der Filterscheiben 3 erreicht wird.
In Fig. 5 ist eine Variante der Erfindung dargestellt, bei der mehrere mit Filterscheiben 3 versehene Wellen 2 horizontal nebeneinander und zwei derartige Ebenen übereinander angeordnet sind. Grundsätzlich können auch mehrere Ebenen übereinander angeordnet werden. Die Ebenen sind durch eine im Gehäuse 11 angeordnete Trennwand 12 mit einer Öffnung 13 abgetrennt. Dadurch können verschiedene Konzentratstufungen mit unterschiedlichen Druckverhältnissen für eine optimale Leistungsausbeute bei hoher Aufkonzentration in einem Gehäuse realisiert werden. Die Teilung des Gehäuses 11 erfolgt vorteilhafterweise auf der Mittelachse der Wellen, wodurch auch Montage und Demontage der Wellen mittels Kran erleichtert wird. Der Antrieb der Wellen 2 kann bei einer derartigen Anordnung für eine Ebene gemeinsam über einen Riemen 14, 14' von einer einzelnen Antriebswelle 15 erfolgen. Durch geeignete Anordnung der Öffnung 13 in der Trennwand 12 im Verhältnis zum Zu- und Ablauf der Suspension kann eine Kurzschlußströmung verhindert werden. Damit wird auch die gewünschte Leistung ermöglicht.
Fig. 6 zeigt eine ähnliche Anordnung wie Fig. 5, jedoch nur mit einer Ebene von Wellen 2. Hier sind die zusätzlichen Einbauten 16 zur Verringerung des Hohlraumes des Gehäuses 11 erkennbar, die den Umrissen der Filterscheiben 3 angepaßt und an den Gehäusewänden befestigt sind. Grundsätzlich ist auch eine Anpassung der äußeren Form des Gehäuses an die Umrisse der Filterscheiben denkbar, was jedoch eine aufwendigere Gehäusefertigung nach sich ziehen würde.
Fig. 7 stellt eine Zusammenstellung eines Filters 1 mit Gehäuse 11 und Antrieb 17 mit Antriebswelle 15 und Riemen 14 dar. Weiters sind der tangential angeordnete Zulauf 18 des Rohmediums und der Ablauf 19 zu erkennen. Die horizontal verlaufenden Hohlwellen 2 münden gemeinsam in einen Filtratsammelkasten 20. Dieser Filtratsammelkasten 20 ist druckfest ausgebildet, so daß die Suspension auch unter Druck zugeführt und auch abgeführt werden kann uns, wodurch sich Filtrationsleistungen durch Einstellung des Gegendruckes regeln lassen. Bei Verwendung von Unterdruck ergeben sich höhere maximale Filtratdurchsatzleistungen. Weiters kann mit erhöhtem Druck mit Filtrat rückgespült werden, um die Reinigung der Oberflächen zu verstärken und die Intervalle für eine chemische Reinigung zu verlängern.

## Patentansprüche

1. Filter mit mehreren auf einer Welle angebrachten rotierenden Filterscheiben, die mit einem porösen Filtermedium versehen sind, **dadurch gekennzeichnet, daß** zwischen den einzelnen Filterscheiben (3) auf der Welle (2), insbesondere Hohlwelle, Elastomerelemente (8, 8') als Abstandhalter angeordnet sind.

2. Filter nach Anspruch 1, **dadurch gekennzeichnet, daß** die Elastomerelemente (8) aus einem Stück sind.

3. Filter nach Anspruch 1 oder 2, **dadurch gekennzeichnet, daß** mehrere Abstandhalter (8') aus Elastomer vorgesehen sind, wobei Abstandhalter (10) aus Metall zwischengeschaltet sind.

4. Filter nach einem der Ansprüche 1 bis 3, **dadurch gekennzeichnet, daß** Pakete aus mehreren Filterscheiben (3) und Elastomerelementen (8, 8') vorgesehen sind, die gemeinsam axial vorgespannt sind.

5. Filter nach Anspruch 4, **dadurch gekennzeichnet, daß** 5 bis 20, vorzugsweise 10 bis 15 Filterscheiben (3) als Paket zusammengespannt sind.

6. Filter nach einem der Ansprüche 1 bis 5, **dadurch gekennzeichnet, daß** mehrere Wellen (2) mit Filterscheiben (3) in einer Ebene angeordnet und gemeinsam z.B. über einen Riemen (14,14') angetrieben werden.

7. Filter nach Anspruch 6, **dadurch gekennzeichnet, daß** mehrere Ebenen von Wellen (2) mit Filterscheiben (3) vorgesehen sind, die in einem gemeinsamen Gehäuse (11) durch mit geeigneten Öffnungen (13) versehene Trennwände (12) voneinander getrennt sind.

8. Filter nach Anspruch 6 oder 7, **dadurch gekennzeichnet, daß** Einrichtungen (16) vorgesehen sind, die den Umrissen der Filterscheiben (3) angepaßt sind und den Hohlraum des Gehäuses (11) verringern.

9. Filter nach einem der Ansprüche 1 bis 8, **dadurch gekennzeichnet, daß** an einem Ende der Wellen (2) ein Filtratsammelkasten (20) angeordnet ist, in den alle Hohlwellen (2) münden und der vorzugsweise druckfest ausgebildet ist.

## Claims

1. Filter with several rotating filter discs mounted on a shaft, which are provided with a porous filter medium, **characterised by** elastomer elements (8, 8') being mounted on the shaft (2), especially a hollow shaft, as spacers between the individual filter discs (3).

2. Filter according to Claim 1, **characterised by** the elastomer elements (8) being manufactured in one piece.

3. Filter according to Claim 1 or 2, **characterised by** several elastomer spacers (8') being provided, interspersed with metal spacers (10).

4. Filter according to one of Claims 1 to 3, **characterised by** packages consisting of several filter discs (3) and elastomer elements (8, 8') being pre-loaded together in axial direction.

5. Filter according to Claim 4, **characterised by** 5 to 20, preferably 10 to 15 filter discs (3) being joined to form a package.

6. Filter according to one of Claims 1 to 5, **characterised by** several shafts (2) with filter discs (3) being arranged on one level and driven all together, for example via a belt (14, 14').

7. Filter according to Claim 6, **characterised by** several levels of shafts (2) with filter discs (3) being provided, where these levels are separated from one another by dividing walls (12) with suitable openings (13) mounted in a shared housing (11).

8. Filter according to Claim 6 or 7, **characterised by** internal mountings (16) being provided which are adapted to the contours of the filter discs (3) and which reduce the hollow space in the housing (11).

9. Filter according to one of Claims 1 to 8, **characterised by** a filtrate receiver (20) being located at one end of the shafts (2) and into which all hollow shafts (2) discharge, preferably of pressure-resistant design.

## Revendications

1. Filtre comportant plusieurs disques filtrants rotatifs montés sur un arbre, qui sont pourvus d'un moyen filtrant poreux, **caractérisé en ce que** des éléments d'élastomère (8, 8') sont montés à l'arbre (2), surtout un arbre creux, en tant qu'écarteurs entre les disques filtrants individuels (3).

2. Filtre selon la revendication 1, **caractérisé en ce que** les éléments (8) sont fabriqués en une pièce.

3. Filtre selon la revendication 1 ou 2, **caractérisé en ce que** plusieurs écarteurs d'élastomère (8') sont pourvus, avec des écarteurs métalliques (10) intercalés.

4. Filtre selon l'une des revendications 1 à 3, **caractérisé en ce que** des paquets consistant en plusieurs disques filtrants (3) et éléments d'élastomère (8, 8') sont pourvus, qui sont précontraints ensemble en direction axiale.

5. Filtre selon la revendication 4, **caractérisé en ce que** 5 à 20 disques filtrants, de préférence 10 à 15 disques filtrants (3) sont joints en un paquet.

6. Filtre selon l'une des revendications 1 à 5, **caractérisé en ce que** plusieurs arbres (2) avec disques filtrants (3) sont disposés au même niveau et actionnés tous ensemble, par exemple moyennant une courroie (14, 14').

7. Filtre selon la revendication 6, **caractérisé en ce que** plusieurs niveaux d'arbres (2) à disques filtrants (3) sont prévus, qui se trouvent séparés l'un de l'autre par des cloisons (12) avec ouvertures appropriées (13) disposées dans une boîte commune (11).

8. Filtre selon la revendication 6 ou 7, **caractérisé en ce que** des chicanes (16) sont prévues, qui sont adaptées aux contours des disques filtrants (3) et qui réduisent l'espace creux dans la boîte (11).

9. Filtre selon l'une des revendications 1 à 8, **caractérisé en ce qu'**un collecteur de filtrat (20) est disposé sur l'un des bouts des arbres (2), où tous les arbres creux (2) conduisent et qui est, de préférence, à exécution résistant à la pression.
